Europäisches Patentamt

European Patent Office

Office européen des brevets

(11) Veröffentlichungsnummer: **0 232 836 B1**

(12) **EUROPÄISCHE PATENTSCHRIFT**

(45) Veröffentlichungstag der Patentschrift: **29.07.92**

(21) Anmeldenummer: **87101454.4**

(22) Anmeldetag: **03.02.87**

(51) Int. Cl.⁵: **B66F  3/12**

(54) **Spindelwagenheber.**

(30) Priorität: **04.02.86 DE 3603311**

(43) Veröffentlichungstag der Anmeldung:
**19.08.87 Patentblatt  87/34**

(45) Bekanntmachung des Hinweises auf die
Patenterteilung:
**29.07.92 Patentblatt  92/31**

(84) Benannte Vertragsstaaten:
**DE ES GB IT**

(56) Entgegenhaltungen:
**DE-A- 2 430 033      DE-A- 2 621 425**
**DE-A- 2 936 002      DE-A- 3 037 934**
**DE-B- 1 217 570      DE-U- 8 513 329**
**DE-U- 8 522 952      FR-A- 2 233 274**
**FR-A- 2 353 480      GB-A- 512 486**
**GB-A- 2 134 075**

(73) Patentinhaber: **E.A. STORZ GMBH & CO. KG**
**Möhringer Strasse 77-79**
**W-7200 Tuttlingen 1(DE)**

(72) Erfinder: **Weisser, Dieter, Dipl.-Ing.**
**Schumannstrasse 27**
**W-7200 Tuttlingen(DE)**
Erfinder: **Hafner, Franz**
**Zeppelinstrasse 13**
**W-7204 Wurmlingen(DE)**

(74) Vertreter: **Hoeger, Stellrecht & Partner**
**Uhlandstrasse 14 c**
**W-7000 Stuttgart 1(DE)**

## Beschreibung

Die Erfindung betrifft einen Spindelwagenheber mit einer Standsäule, an deren oberem Bereich eine mit einer Kurbel versehene Gewindespindel um ihre Längsachse drehbar sowie um eine Querachse schwenkbar gelagert und an der zwischen Gewindespindellager und unterem Standsäulenende ein Tragarm um eine zu der genannten Querachse parallele Achse schwenkbar gelagert ist, sowie mit einem an einer Fahrzeugkarosserie ansetzbaren Lastträger, der am Tragarm im Bereich dessen freien Endes um eine zu der Querachse parallele Achse drehbar angebracht und durch ein Stellglied bezüglich des Tragarms derart gesteuert drehbar ist, daß der Lastträger beim Verschwenken des Tragarms stets ungefähr die gleiche Lage relativ zur Fahrzeugkarosserie einnimmt, und mit einem am unteren Standsäulenende angeordneten Fuß.

Ein derartiger Wagenheber, bei dem das den Lastträger gegenüber dem Tragarm gesteuert drehende Stellglied von der einen Kanal des Lastträgers durchsetzenden Gewindespindel gebildet wird, ist durch die DE-A-24 30 033 bekanntgeworden. Er besitzt einen sogenannten Wälzfuß in Form einer - in Richtung senkrecht zur Bewegungsebene des Tragarms gesehen - einen stumpfen Winkel von ca. 135° bildenden Fußplatte, die mit der von einem in Richtung auf den Tragarm offenen U-Profil gebildeten Standsäule durch Schweißen fest verbunden ist; zu diesem Zweck sind die beiden Seitenwände des Standsäulenprofils an ihren unteren Enden so zugeschnitten, daß auch sie einen entsprechenden stumpfen Winkel bilden. Der dem freien Tragarmende zugewandte vordere Bereich der Fußplatte verläuft ungefähr senkrecht zur Längsrichtung der Standsäule, während der hintere Fußplattenbereich mit der Standsäulenlängsrichtung einen spitzen Winkel bildet. Wird der Wagenheber zum Anheben eines Fahrzeugs an die Fahrzeugkarosserie angesetzt, so steht die Standsäule zunächst auf dem hinteren Fußplattenbereich, und im Laufe des Anhebens der Fahrzeugkarosserie kippt die Standsäule um die von der Fußplatte gebildete, die beiden Fußplattenbereiche voneinander abgrenzende Kippkante. In der Regel steht der Wagenheber nur dann vollflächig auf dem vorderen Fußplattenbereich, wenn der Tragarm bis in den Bereich seiner oberen Endstellung hochgeschwenkt wird.

Wie die verhältnismäßig große Zahl von an den Hersteller zurückgesandten, durch Gebrauch beschädigten Wagenhebern zeigt, werden derartige, mit einem sogenannten Wälzfuß versehene Wagenheber häufig falsch angesetzt und dann beim Versuch des Anhebens des Fahrzeugs beschädigt, wobei die Gefahr der Beschädigung durch schlechte Bodenverhältnisse, oder dann, wenn das anzuhebende Fahrzeug bei geneigtem Boden Schubkräfte auf den Wagenheber ausübt, noch erhöht wird, weil dann - wie nachstehend noch erörtert werden wird - der Kontakt zwischen Wälzfuß und Boden unter Umständen auf einen punktförmigen Kontakt reduziert wird. Da eine im Umgang mit Wagenhebern ungeübte Bedienungsperson bei einem Wagenheber mit Wälzfuß nicht weiß, ob der an dem anzuhebenden Fahrzeug anzusetzende Wagenheber mit seinem hinteren Fußplattenbereich, seinem vorderen Fußplattenbereich oder mit seiner Kippkante zwischen den beiden Fußplattenbereichen auf dem Boden aufzusetzen ist, bestehen die häufigsten Fehler bei der Handhabung eines Wagenhebers mit Wälzfuß, die dann zu einer Beschädigung führen, darin, daß die Fußplatte zu weit oder nicht weit genug unter die Fahrzeugkarosserie geschoben wird, wenn man den am Tragarm angebrachten Lastträger an der Karosserie, und zwar in der Regel im Bereich des sogenannten Schwellernahtstegs, ansetzt, wobei in diesem Zusammenhang zu erwähnen ist, daß eine ungeübte Bedienungsperson auch nicht weiß, welche Winkelstellung (bezüglich der Standsäule) der Tragarm zum Ansetzen des Wagenhebers am Fahrzeug einzunehmen hat. Beschädigungen sind oft aber auch darauf zurückzuführen, daß die Fußplatte eines Wagenhebers auf eine stark vereiste Straße aufgesetzt wird und/oder daß das anzuhebende Fahrzeug nach einer Seite zu stark geneigt ist. Die Folgen solcher Fehler sind bei dem vorstehend geschilderten bekannten Wagenheber irreversible Verformungen der Fußplatte, ja sogar der Standsäule, es können aber auch Beschädigungen an der Fahrzeugkarosserie auftreten. In diesem Zusammenhang muß bedacht werden, daß dieser bekannte Wagenheber im Falle eines falschen Ansetzens nach einem gewissen Anheben der Fahrzeugkarosserie unter Umständen nur noch auf einer Seitenkante der Fußplatte oder sogar nur noch auf dem einen Ende der Kippkante seiner Fußplatte steht, so daß der Kontakt zwischen Wagenheber und Straße, Werkstattboden oder dergleichen auf eine linienförmige oder sogar punktförmige Berührung reduziert ist. Eine linienförmige Berührung zwischen Wagenheber und Untergrund läßt sich im übrigen bei dem geschilderten bekannten Wagenheber grundsätzlich nicht vermeiden, da der Wagenheber nur noch auf seiner Kippkante steht, nachdem sein Tragarm ein Stück weit hochgeschwenkt und das Fahrzeug etwas angehoben wurde. In diesem Zusammenhang ist zu bedenken, daß es das Grundprinzip eines mit einem sogenannten Wälzfuß ausgerüsteten Wagenhebers ist, daß dieser so ausgebildet wird, daß im Zuge des Anhebens des Fahrzeugs ein auf die Standsäule einwirkendes Kippmoment entsteht, welches die Standsäule aufrichtet, so daß sie sich zunächst über die zwischen den beiden ebenen Bereichen des Wälzfußes liegende Kippkante auf dem Boden abstützt und dann noch weiter nach vorne kippt, bis sie sich über den ebenen, vor der Kippkante liegenden Bereich des Wälzfußes auf dem Boden abstützt. Bei einem Wagenheber mit einem Wälzfuß ist also ein erhebliches, auf die Standsäule einwirkendes Kippmoment, welches bestrebt ist, den oberen Bereich der Standsäule in Richtung auf die Fahrzeugkarosserie zu bewegen, notwendige und unabdingbare Voraussetzung für die Funktion des Wagenhebers.

Die GB-A-2 134 075 zeigt einen Spindelwagenheber mit einem am freien Tragarmende schwenkbar oder fest angebrachten Lastträger, dessen Aufgabe es sein soll, die Nachteile eines Spindelwagenhebers mit einem sogenannten Wälzfuß zu vermeiden. Zu diesem Zweck wurde dieser bekannte Wagenheber mit einer an der Standsäule um eine Querachse frei schwenkbar angebrachten Fußplatte mit im wesentlichen ebener Auflagefläche ausgerüstet. Bei senkrecht stehender Standsäule endet diese in einem gewissen Abstand über der Fußplatte, welche im Bereich der Mitte ihrer Längsränder mit zwei verhältnismäßig hohen, zungenförmigen Gelenklaschen versehen ist, welche das untere Ende der Standsäule zwischen sich aufnehmen und mit letzterem über ein eine Querachse definierendes Gelenk verbunden sind, das - in der Seitenansicht des Wagenhebers gesehen - in der Längsmittelachse der Standsäule und über dem Zentrum der Fußplatte liegt (bei senkrecht stehender Standsäule ist also die von Standsäule und Fußplatte gebildete Baugruppe symmetrisch zur Längsmittelachse der Standsäule - wiederum in der Seitenansicht des Wagenhebers gesehen). Damit dieser bekannte Wagenheber überhaupt an dem anzuhebenden Fahrzeug angesetzt werden kann, was ein Schrägstellen der Standsäule erforderlich macht, ist deren unteres Ende vom Standsäulenrücken ausgehend abgerundet. Ein Nachteil dieses bekannten Wagenhebers ist darin zu sehen, daß sich der Lastträger bei fester Anbringung am Tragarm während des Anhebens des Fahrzeugs nicht an die Fahrzeugkarosserie anpassen kann; in der GB-A-2 134 075 ist zwar erwähnt, daß der Lastträger auch um eine Querachse frei schwenkbar am Tragarm angebracht sein kann, dann ergibt sich jedoch ein labiles Gebilde, weil sowohl die Fußplatte, als auch der Lastträger um Querachsen frei schwenkbar sind. Bei der Beurteilung dieses bekannten Wagenhebers muß auch noch folgender Umstand in Betracht gezogen werden: Beim Anheben eines Fahrzeugs, dessen Längsachse senkrecht zur Bewegungsebene des Tragarms eines Spindelwagenhebers verläuft, kippt das Fahrzeug um das Räderpaar, welches sich auf der vom Wagenheber abgewandten Seite des Fahrzeugs befindet. Infolgedessen beschreibt diejenige Stelle der Fahrzeugkarosserie, an der der Lastträger angesetzt wird, im Zuge des Anhebens des Fahrzeugs einen Kreisbogen, dessen Zentrum in der von den Aufstandsstellen der beiden genannten Räder auf dem Boden definierten Achse liegt. Im Zuge des Anhebens des Fahrzeugs bewegt sich die Ansetzstelle des Wagenhebers an der Fahrzeugkarosserie - in der Draufsicht auf das Fahrzeug und den Wagenheber gesehen - also vom Wagenheber weg. Damit entfernt sich auch die vertikal verlaufende Wirkungslinie der vom Wagenheber zu tragenden und auf den Lastträger einwirkenden Last - wiederum in der Draufsicht auf das Fahrzeug und den Wagenheber gesehen - von dem Standsäule und Fußplatte miteinander verbindenden Gelenk, wodurch ein auf die Standsäule einwirkendes Kippmoment hervorgerufen wird, welches bestrebt ist, die Standsäule um die Achse des genannten Gelenks in Richtung auf die Fahrzeugkarosserie zu verschwenken. Befindet sich die Ansetzstelle des Wagenhebers (üblicherweise ein Schwellernahtsteg) im Abstand von der benachbarten Längsseitenfläche der Fahrzeugkarosserie, besteht dann die Gefahr einer Beschädigung dieser Karosserielängsseitenfläche durch den oberen Bereich der Standsäule.

Aus der DE-A-26 21 425 ist schließlich ein Spindelwagenheber bekanntgeworden, welcher eine im wesentlichen ebene Fußplatte mit zwei Paaren von Gelenklaschen (einem vorderen und einem hinteren Gelenklaschenpaar) aufweist; mit dem hinteren Gelenklaschenpaar ist die Fußplatte nahe dem Standsäulenrücken an der Standsäule um eine Querachse verschwenkbar angelenkt, während am vorderen Gelenklaschenpaar eine Zug- bzw. Druckstange um eine Querachse verschwenkbar angelenkt ist, deren oberes Ende um eine Querachse verschwenkbar am Tragarm angelenkt ist. Bei diesem bekannten Wagenheber wird also sowohl der Lastträger gegenüber dem Tragarm, als auch die Fußplatte gegenüber der Standsäule in Abhängigkeit von dem Winkel zwischen Standsäule und Tragarm gesteuert verschwenkt. Infolgedessen kann sich die Fußplatte weder der Bodenneigung, noch Bodenunebenheiten anpassen, und da eine Bedienungsperson in aller Regel beim Ansetzen eines Wagenhebers an einer Fahrzeugkarosserie von oben auf den Wagenheber blickt, kann sie überhaupt nicht überprüfen, ob beim Ansetzen des Wagenhebers die Fußplatte flach, d. h. vollflächig, auf dem Boden aufliegt. Dies gilt erst recht für moderne Fahrzeugkarosserien mit stark ausgerundeten Karosserieschwellern, da bei diesen Fahrzeugen der Karosserieschweller nach der Seite zu weit über die Ansetzstelle des Lastträgers des Wagenhebers und damit auch über diejenige Stelle hinausragt, auf der die Wagenheber-Fußplatte auf dem Boden aufliegt. Bei einem harten Boden läßt es sich also überhaupt nicht vermeiden, daß die Fußplatte dieses bekannten Wagenhebers sich nur mit einer ihrer Querkanten auf dem Boden abstützt, wenn das Fahrzeug angehoben wird, denn im Umgang mit Wagenhebern ungeübte Personen - und dies ist bei der heutigen Robustheit der Fahrzeuge in der Praxis der Regelfall - werden niemals die theoretisch richtige Ansetzstellung des Wagenhebers auf Anhieb auffinden und die Fußplatte so weit unter die Fahrzeugkarosserie schieben, daß sie flach, d. h. vollflächig, auf dem Boden aufliegt, wenn das Fahrzeug angehoben wird.

Abschließend sei noch darauf hingewiesen, daß es bei Wagenhebern mit einer frei schwenkbar angebrachten Fußplatte an sich bekannt ist, deren Schwenkachse im vorderen Bereich der Fußplatte anzuordnen. Die DE-U-85 13 829.0 beschreibt einen sogenannten Scherenwagenheber mit einer Standsäule, einem an deren oberem Ende schwenkbar angebrachten Tragarm und zwei Gelenklaschen, welche aneinander, am Tragarm und an der Standsäule so angelenkt sind, daß Standsäule, Tragarm und die beiden Gelenklaschen miteinander ein Gelenkparallelogramm bilden. Die Gewindespindel greift dabei einerseits an dem Gelenk zwischen Standsäule und Tragarm und andererseits an dem Gelenk zwischen den beiden Gelenklaschen an. Am freien Tragarmende, welches die Anlenkstelle der einen Gelenklasche überragt, ist ein frei verschwenkbarer Lastträger angeordnet. Am unteren Ende der Standsäule, welches die Anlenkstelle der anderen Gelenklasche überragt, ist die Fußplatte angelenkt, und zwar im Bereich des Standsäulenrückens. Dieser bekannte Wagenheber soll so gestaltet sein, daß sein Lastangriffspunkt (am Lastträger) im Zuge des Anhebens des Fahrzeugs (in der Draufsicht auf den Wagenheber gesehen) über die Kippachse der Standsäule hinüberwandert, und zwar von der dem Fahrzeug zugekehrten Seite auf die vom Fahrzeug abgewandte Seite der Kippachse, so daß ein den Wagenheber vom Fahrzeug wegschwenkendes Kippmoment entsteht. Deshalb stützt sich dieser bekannte Wagenheber immer über einen an der unteren Gelenklasche festangebrachten steifen Sporn, welcher das untere Ende dieser Gelenklasche überragt, auf der Fußplatte ab, was bei diesem bekannten Wagenheber der einzige Grund dafür ist, daß die Fußplatte nach hinten verlängert wurde und infolgedessen das Gelenk zwischen Standsäule und Fußplatte im vorderen Bereich der Fußplatte liegt.

Der Erfindung lag ausgehend von einem Wagenheber der eingangs genannten Art die Aufgabe zugrunde, einen Spindelwagenheber zu schaffen, bei dem unter Beibehaltung des Vorteils, daß sich der am Tragarm angelenkte Lastträger in jeder Phase des Hebevorgangs verhältnismäßig gut an die Fahrzeugkarosserie anpassen kann, ein sicherer Stand des Wagenhebers beim Ansetzen an die Fahrzeugkarosserie sowie im Laufe des Hebevorgangs gewährleistet ist und die beschädigungsfreie Handhabung erleichtert ist.

Diese Aufgabe läßt sich erfindungsgemäß dadurch lösen, daß der Fuß als mit im wesentlichen ebener unterer Stützfläche versehene Fußplatte ausgebildet ist, welche um eine zur Querachse parallele Kippachse frei schwenkbar an der Standsäule angelenkt ist, wobei - in Richtung der Kippachse gesehen - ein größerer Teil der Fußplatte auf der im Gebrauch von der Fahrzeugkarosserie abgewandten Seite der Kippachse liegt, und daß eine die Fußplatte in eine Ausetzstellung gegen einen von der Standsäule gebildeten Auschlag drückende Feder vorgesehen ist. Bei einem erfindungsgemäßen Wagenheber stützt sich die Standsäule in jeder Phase des Hubvorgangs über die ganze Fußplatte auf dem Boden ab, und der Lastträger paßt sich im Zuge des Anhebens an die Karosserie an, ohne daß der Wagenheber ein labiles Gebilde darstellen würde, wie es dann der Fall wäre, wenn man einen Wagenheber mit einer frei schwenkbaren Fußplatte auch noch mit einem frei schwenkbaren Lastträger versehen würde. Infolge der erfindungsgemäßen Anordnung der Kippachse ist ein im Laufe des Hubvorgangs gegebenenfalls auf die Standsäule einwirkendes Kippmoment wesentlich kleiner als bei dem Wagenheber nach der GB-A-2 134 075, weil ein solches Kippmoment umso kleiner wird, je weiter man die Schwenkachse zwischen Standsäule und Fußplatte auf letzterer nach vorne rückt. Wegen der freien Beweglichkeit der Fußplatte eines erfindungsgemäßen Wagenhebers muß dieser aber auch nicht in einer ganz präzise bestimmten Position relativ zur Karosserie am Fahrzeug angesetzt werden, so daß Beschädigungen des Wagenhebers infolge zu weit unter die Karosserie geschobener Fußplatte oder nicht nahe genug bei der Karosserie positionierter Fußplatte nicht auftreten können, und ein Wegrutschen der Fußplatte läßt sich aufgrund des großen Reibwinkels nahezu ausschließen. Während bei einem Kippen des vorstehend beschriebenen bekannten Wagenhebers mit Wälzfuß in Fahrzeuglängsrichtung nach dem Anheben des Fahrzeugs (infolge einer vom Fahrzeug auf den Wagenheber ausgeübten Schubkraft) die Abstützung am Boden häufig nur noch eine punktförmige ist, nämlich über das eine Ende der Kippkante des Wälzfußes, ist beim erfindungsgemäßen Wagenheber zumindest eine linienförmige Auflage der Fußplatte auf dem Boden gewährleistet. Auch verhindert die großflächige Abstützung des erfindungsgemäßen Wagenhebers über die ganze Fußplatte ein Einsinken in einen weichen Boden viel besser, denn ein Wagenheber mit einem Wälzfuß stützt sich bei voll angehobenem Fahrzeug bestenfalls über den kleineren vorderen Fußplattenbereich auf dem Boden ab. Durch die die Fußplatte in eine Ansetzstellung drückende Feder wird nicht nur ein Klappern der frei verschwenkbaren Fußplatte bei im Fahrzeug verstautem Wagenheber verhindert wird, sondern man gibt dadurch der den Wagenheber benutzenden Person auch einen noch besseren Hinweis dafür, in welcher Position der Wagenheber zweckmäßigerweise angesetzt wird, da ja jeder Benutzer eines erfindungsgemäßen Wagenhebers diesen so auf den Boden aufsetzen wird, daß die Fußplatte vollflächig auf dem Boden aufliegt.

Bei den bekannten Wagenhebern mit U-förmigem Standsäulenprofil und mit der Standsäule fest verbundenem Wälzfuß führt der letztere zu einer völlig starren Ausbildung des unteren Bereichs der Standsäule. Ist die Fußplatte des erfindungsgemäßen Wagenhebers an zwei längs der Kippachse im Abstand voneinander angeordneten Lagern mit der Standsäule verbunden und sind die beiden Lager durch elastische Deformation der Standsäule oder dadurch, daß die Lager in der Standsäule begrenzt verschieblich gehalten sind, ungefähr in Längsrichtung der Standsäule relativ zueinander bewegbar, so wie dies für eine vorteilhafte Ausführungsform des erfindungsgemäßen Wagenhebers empfohlen wird, so führt ein im Zuge des Anhebens eines Fahrzeugs eintretendes und sich innerhalb gewisser Grenzen haltendes Kippen der Standsäule in Fahrzeuglängsrichtung immer noch nicht zu einer nur linienförmigen Auflage der Fußplatte auf dem Boden, sondern die vollflächige Auflage der Fußplatte auf dem Boden bleibt erhalten.

Bei einer besonders vorteilhaften Ausführungsform des erfindungsgemäßen Wagenhebers besitzt dessen Lastträger eine nutförmige Ausnehmung zur Aufnahme eines stegförmigen Karosseriebereichs, wobei die Ausnehmung einen sich in Richtung auf den Nutgrund erweiternden Querschnitt aufweist. Dies ist an sich bei Wagenhebern mit Wälzfuß bekannt (DE-A-29 36 002). Eine solche Ausführungsform des erfindungsgemäßen Wagenhebers führt zu dem Vorteil, daß der Schwellernahtsteg im Laufe des Anhebens des Fahrzeugs gegenüber dem Lastträger kippen kann, ohne daß die Gefahr besteht, daß er durch den Lastträger deformiert und beschädigt wird, was zumindest zur Folge hätte, daß an derjenigen Stelle, an der der Wagenheber angesetzt wurde, der Rostschutz der Fahrzeugkarosserie beeinträchtigt ist. Auch führt diese Maßnahme zu einer größeren Freiheit hinsichtlich der Positionierung des Wagenhebers relativ zur Karosserie beim Ansetzen des Wagenhebers.

Besondere Vorteile lassen sich bei einem erfindungsgemäßen Wagenheber, dessen Standsäule zwei in Richtung der Kippachse im Abstand voneinander angeordnete Seitenwände aufweist, dadurch erzielen, daß man den Wagenheber so gestaltet, daß die Standsäulenseitenwände unten schräge Kanten aufweisen, gegen welche die Fußplatte in einer Ansetzstellung des Wagenhebers anliegt. Dann sind die unteren Kanten der Standsäulenseitenwände länger als bei einem Wagenheber, bei dem (bei - in der Seitenansicht gesehen - gleicher Breite der Standsäule) sich die unteren Kanten der Standsäulenseitenwände quer zur Standsäulenlängsrichtung erstrecken; bei einem solchen erfindungsgemäßen Wagenheber kann also auch die Fußplatte länger bemessen werden, ohne daß sie seitlich (in der Seitenansicht des Wagenhebers gesehen) über die Standsäule übersteht - entsprechendes gilt natürlich auch für einen Wagenheber mit einem bestimmten, festen seitlichen Überstand der Fußplatte über die Standsäule. Damit läßt sich bei dem erfindungsgemäßen Wagenheber eine verhältnismäßig große Fußplatte verwirklichen, wodurch die Standsicherheit des Wagenhebers verbessert wird, ohne daß ein nennenswerter, bei der Unterbringung des Wagenhebers im Fahrzeug störender Überstand der Fußplatte über die Standsäule in Kauf genommen werden muß.

Weitere vorteilhafte Ausgestaltungen des erfindungsgemäßen Wagenhebers ergeben sich aus den beigefügten Ansprüchen 6 - 9.

Im folgenden soll nun die Erfindung anhand zweier, in der beigefügten Zeichnung dargestellter, besonders vorteilhafter Ausführungsformen des erfindungsgemäßen Wagenhebers noch näher erläutert werden; in der Zeichnung zeigen:

Fig. 1 den Wagenheber gemäss der ersten Ausführungsform in der Seitenansicht, wobei der untere Bereich teilweise aufgebrochen wurde und drei verschiedene Positionen dargestellt sind, die der Wagenheber im Zuge des Anhebens einer Fahrzeugkarosserie einnimmt;

Fig. 2 einen Schnitt nach der Line 2-2 in Figur 1;

Fig. 3 eine der Fig.1 entsprechende Darstellung des unteren Bereichs der Standsäule sowie der Fussplatte der zweiten Ausführungsform, und zwar in der Ansetzposition des Wagenhebers, und

Fig. 4 einen Schnitt durch das Standsäulenprofil entspr. der Linie 4-4 in Figur 3.

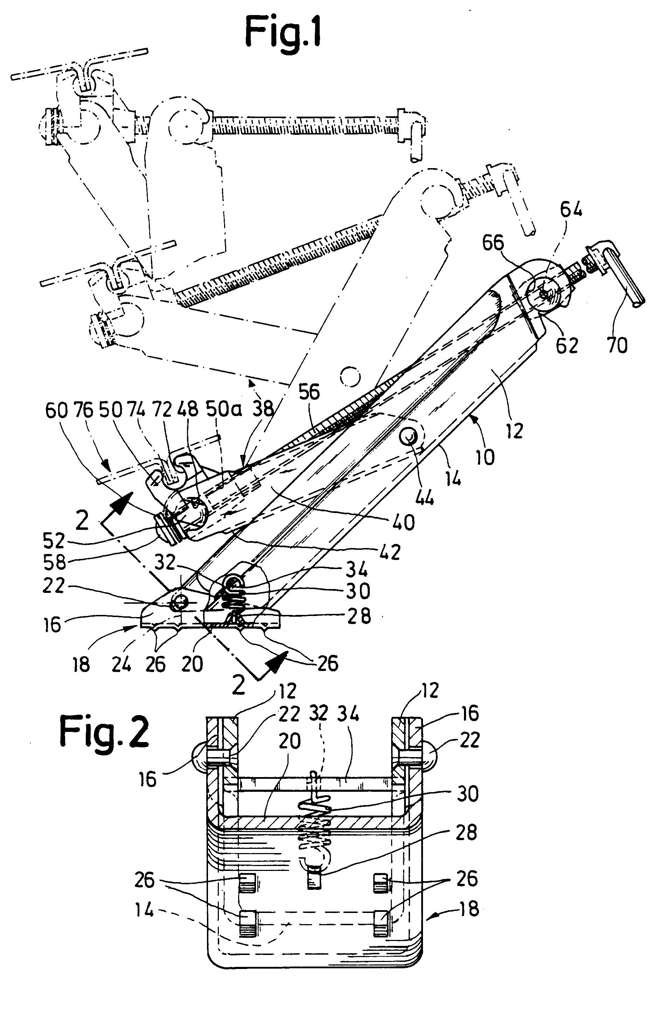

Der in den Figuren 1 und 2 gezeigte Wagenheber besitzt eine Standsäule 10, die mit zwei Seitenwänden 12 und einem Rücken 14 ein U-Profil bildet. Am unteren Ende der Standsäule besitzen die Seitenwände 12 schräge Kanten und werden von Seitenwangen 16 einer als Ganzes mit 18 bezeichneten Fussplatte überfangen, die eine Art Schuh mit einer ebenen Bodenplatte 20 bildet, an die die hochgebogenen Seitenwangen 16 angeformt sind. Zwei Niete 22 dienen der Anlenkung der Fussplatte 18 an der Standsäule 10, so daß die Bodenplatte 20 um eine in Figur 1 mit 24 bezeichnete Kippachse schwenken kann.

Zur Verbesserung der Bodenhaftung wurden aus der Bodenplatte 20 nach unten spitze Vorsprünge 26 herausgedrückt. Ausserdem ist durch Anstanzen und Umbiegen an die Bodenplatte 20 oben ein Haken 28 angeformt, in den sich eine Zugfeder 30 mit ihrem einen Ende einhängen lässt. Das andere Ende der Zugfeder ist in ein Loch 32 eines Brückenstegs 34 eingehängt, der zwischen den beiden Seitenwänden 12 der Standsäule 10 befestigt wurde, beispielsweise durch Einschweissen. Mit Hilfe der Zugfeder 30 wird die Fussplatte 18 in die in Figur 1 gezeigte Ansetzstellung gezogen, in der die Bodenplatte 20 gegen die unteren Kanten der Seitenwände 12 anliegt.

In das sich gemäss Figur 1 nach links oben öffnende U-Profil der Standsäule 10 greift zwischen deren Seitenwände 12 ein als Ganzes mit 38 bezeichneter Tragarm ein, welcher gleichfalls von einem U-Profil gebildet werden soll, das zwei Seitenwände 40 und einen Rücken 42 aufweist. Die Seitenwände 40 liegen gegen die Seitenwände 12 der Standsäule 10 an und sind mit dieser durch zwei Niete 44 gelenkig verbunden. Der Aufbau des Tragarms und der übrigen Teile des Wagenhebers ist in den deutschen Offenlegungsschriften 29 36 002 und 30 37 934 detailliert gezeichnet und beschrieben, so daß es für das folgende ausreicht, diesen Aufbau nur kurz zu skizzieren.

Am vorderen, freien Ende des Tragarms besitzen dessen Seitenwände teilkreisförmige und randoffene Ausnehmungen 48, in die ein zwischen die Seitenwände 40 eingreifender Lastträger 50 mit Achsstummeln 52 eingesetzt ist, so daß die letzteren eine Querachse definieren, die zu der von den Nieten 44 definierten Querachse parallel verläuft und um die der Lastträger 50 relativ zum Tragarm 38 kippen kann. Eine Gewindespindel 56 durchsetzt den Lastträger 50 und besitzt an ihrem gemäss Figur 1 linken Ende einen angeformten Kopf 58, zwischen dem und dem Lastträger 50 ein Axiallager 60 angeordnet ist. Auch die Gewindespindel 56 greift also zwischen die Seitenwände 40 des Tragarms 38 ein und verläuft zum oberen Ende der Standsäule 10, wo die Gewindespindel in einer Mutter 62 läuft, die zwischen den Seitenwänden 12 der Standsäule 10 um eine Querachse 64 drehbar gehalten ist. Zu diesem Zweck besitzen auch die Seitenwände 12 der Standsäule teilkreisförmige und randoffene Ausnehmungen 66, in die die Mutter mit angeformten und im Querschnitt kreisförmigen Ansätzen eingreift. Das gemäss Figur 1 rechte Ende der Gewindespindel 56 ist schliesslich mit einer gelenkig angebrachten Handkurbel 70 versehen.

Der Lastträger 50 besitzt eine nutförmige Ausnehmung 72, wobei die Achse der Nut senkrecht zur Zeichnungsebene der Figur 1 verläuft. In diese Ausnehmung greift beim Ansetzen des Wagenhebers ein stegförmiger Bereich 74 der Fahrzeugkarosserie ein, wobei es sich in der Regel um den sog. Schwellernahtsteg handeln wird. Die benachbarten Bereiche des als Ganzes mit 76 bezeichneten Karosserieschwellers liegen dann oben auf dem Lastträger 50 auf, und zwar entweder zu einer der beiden Seiten der Ausnehmung 72 oder zu beiden Seiten der Ausnehmung.

Die Figur 1 zeigt mit ausgezogenen Linien diejenige Position des Wagenhebers, in der dieser mit seiner unten eine im wesentlichen ebene Fläche bildenden Bodenplatte 20 auf die Strasse oder dergleichen aufgesetzt und mit dem Lastträger 50 am Karosserieschweller 76 angesetzt wird. Beim Drehen der Gewindespindel 56 mit Hilfe der Handkurbel 70 schwenkt der Tragarm 38 aus einer Lage ungefähr parallel zur Standsäule 10 nach oben, so daß das Fahrzeug durch den Lastträger 50 angehoben wird. Dieser kann dabei bezüglich des Tragarms 38 nicht frei kippen, denn hieran wird er durch die Gewindespindel 56 gehindert, die einen Kanal 50a des Lastträgers 50 durchsetzt. Im Zuge des Anhebens wird der Lastträger 50 durch die Gewindespindel 56 jedoch so bezüglich des Tragarms 38 verschwenkt, daß der Lastträger seine Lage relativ zum Karosserieschweller 76 stets ungefähr beibehält. Besonders vorteilhaft ist es, wenn die Spindel 56 im Kanal 50a etwas Spiel derart hat, daß der Lastträger 50 gegenüber der Gewindespindel 56 etwas hin-und herkippen und sich infolgedessen im Laufe des Hubvorgangs noch besser an den Karosserieschweller anpassen kann. Dies ist ein besonderer Vorteil der bevorzugten Ausführungsform des erfindungsgemässen Wagenhebers. Der Vermeidung von Beschädigungen des Karosseriebereichs, an den der Wagenheber angesetzt wird, dient auch die Ausbildung der Ausnehmung 72 des Lastträgers 50: diese Ausnehmung öffnet sich nach oben mit einer Art Schlitz, in den der Schwellernahtsteg 74 eingreift, und damit sich dieser im Zuge des Hubvorgangs innerhalb der Ausnehmung 72 etwas hin- und herbewegen kann, und zwar eine Art Kippbewegung durchführen kann, erweitert sich der Querschnitt der Ausnehmung 72 nach unten zu.

Damit sich die Bodenplatte 20 dem Boden besser anpassen kann, empfiehlt es sich, die Standsäule 10 entweder mit in Längsrichtung der Standsäule orientierten Langlöchern für die Aufnahme der Niete 22 zu versehen oder sie so auszubilden, daß sich die beiden Seitenwände 12 der Standsäule 10 in Säulenlängsrichtung geringfügig gegeneinander verschieben können, wenn der Wagenheber belastet wird.

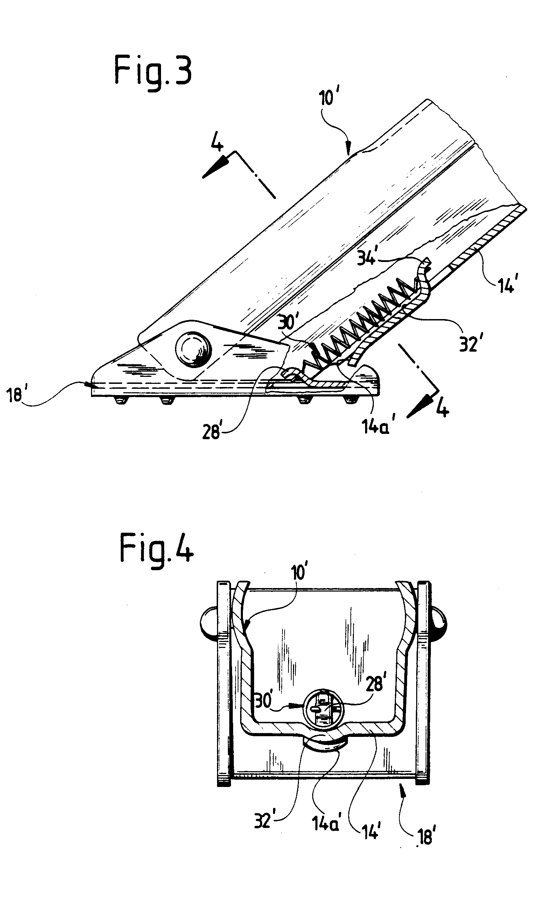

Die in den Figuren 3 und 4 dargestellte zweite Ausführungsform unterscheidet sich von der ersten nur in der Anordnung und Unterbringung einer Zugfeder 30'. Diese ist mit ihrem einen Ende wiederum an einem an einer Fußplatte 18' vorgesehenen Haken 28' eingehängt, während der Aufhängung des anderen Federendes ein Haken 34' dient, welcher von einer Zunge gebildet wird, die aus einer Rückwand 14' einer im Querschnitt U-förmig ausgebildeten Standsäule 10' teilweise ausgestanzt und herausgebogen wurde.

Wie besonders deutlich die Fig. 4 erkennen lässt, wurde in die Rückwand 14' eine Sicke 32' eingeprägt, die nach aussen vorspringt und im Innern der Standsäule 10' die Feder 30' teilweise aufnimmt, so daß die Feder 30', welche bei sich in der gezeichneten Ansetzstellung befindender Fußplatte 18' parallel zur Standsäulenachse und damit zu deren Rückwand 14' verläuft, nur einen geringen Teil des Innenraums der Standsäule 10' beansprucht und somit das Einschwenken des in Fig. 1 gezeigten Tragarms 38 in das Standsäulenprofil hinein nicht behindert.

Damit beim Aufrichten der Standsäule 10' im Zuge des Anhebens einer Fahrzeugkarosserie die Windungen der Feder 30' nicht an der Unterkante der Rückwand 14' scheuern oder diese Unterkante ein Hinweggleiten der Schraubenfederwindungen über die Rückwand 14' nicht behindert, ist die untere Randzone der Rückwand 14' zumindest im Bereich der Sicke 32' unter Bildung einer Ausrundung 14a' nach aussen abgebogen.

Durch die Anordnung der Feder 30' an der Rückwand 14' ist die Feder gegen Beschädigungen geschützt, und beim Schwenken der Standsäule 10' gegenüber der Fußplatte 18' bleibt die Orientierung der Federachse gegenüber der Standsäulenlängsrichtung zumindest nahezu unverändert.

## Patentansprüche

1. Spindelwagenheber mit einer Standsäule (10; 10'), an deren oberem Bereich eine mit einer Kurbel (70) versehene Gewindespindel (56) um ihre Längsachse drehbar sowie um eine Querachse (64) schwenkbar gelagert und an der zwischen Gewindespindellager (62) und unterem Standsäulenende ein Tragarm (38) um eine zu der genannten Querachse (64) parallele Achse (44) schwenkbar gelagert ist, sowie mit einem an einer Fahrzeugkarosserie ansetzbaren Lastträger (50), der am Tragarm (38) im Bereich dessen freien Endes um eine zu der Querachse (64) parallele Achse (52) drehbar angebracht und durch ein Stellglied (56) bezüglich des Tragarms (38) derart gesteuert drehbar ist, daß der Lastträger (50) beim Verschwenken des Tragarms (38) stets ungefähr die gleiche Lage relativ zur Fahrzeugkarosserie einnimmt, und mit einem am unteren Standsäulenende angeordneten Fuß (18; 18'),
**dadurch gekennzeichnet,** daß der Fuß (18; 18') als mit im wesentlichen ebener unterer Stützfläche (20) versehene Fußplatte (18; 18') ausgebildet ist, welche um eine zur Querachse (64) parallele Kippachse (24) frei schwenkbar an der Standsäule (10; 10') angelenkt ist, daß - in Richtung der Kippachse (24) gesehen - ein größerer Teil der Fußplatte (18; 18') auf der im Gebrauch von der Fahrzeugkarosserie abgewandten Seite der Kippachse (24) liegt, und daß eine die Fußplatte (18; 18') im eine Ausetzstellung gegen einen von der Standsäule (10; 10') gebildeten Auschlag drückende Feder (30; 30') vorgesehen, ist.

2. Wagenheber nach Anspruch 1, dadurch gekennzeichnet, daß die Fußplatte (18; 18') an zwei längs der Kippachse (24) im Abstand voneinander angeordneten Lagern (22) mit der Standsäule (10; 10') verbunden ist und daß die beiden Lager (22) durch elastische Deformation der Standsäule (10; 10') oder dadurch, daß die Lager in der Standsäule begrenzt verschieblich gehalten sind, ungefähr in Längsrichtung der Standsäule relativ zueinander bewegbar sind.

3. Wagenheber nach Anspruch 1 oder 2, dessen Lastträger (50) eine nutförmige Ausnehmung (72) zur Aufnahme eines stegförmigen Karosseriebereichs (74) aufweist, dadurch gekennzeichnet, daß die Ausnehmung (72) einen sich in Richtung auf den Nutgrund erweiternden Querschnitt aufweist.

4. Wagenheber nach einem oder mehreren der vorstehenden Ansprüche, dessen Standsäule (10; 10') zwei in Richtung der Kippachse (24) im Abstand voneinander angeordnete Seitenwände (12) aufweist, dadurch gekennzeichnet, daß die Seitenwände (12) unten schräge Kanten aufweisen, gegen welche die Fußplatte (18; 18') in einer Ansetzstellung des Wagenhebers anliegt.

5. Wagenheber nach Anspruch 1, dadurch gekennzeichnet, daß die Feder (30') als Schraubenzugfeder ausgebildet ist und bei sich in Ansetzstellung befindlicher Fußplatte (18') parallel zur Rückwand (14') der ein zum Tragarm (38) zu offenes U-Profil aufweisenden Standsäule (10') verläuft und in deren Innerem angeordnet ist.

6. Wagenheber nach Anspruch 5, dadurch gekennzeichnet, daß die Feder (30') bei sich in Ansetzstellung befindlicher Fußplatte (18') an der Standsäulenrückwand (14') anliegt.

7. Wagenheber nach Anspruch 5, dadurch gekennzeichnet, daß die Standsäulenrückwand (14') zur teilweisen Aufnahme der Feder (30') eine in Standsäulenlängsrichtung verlaufende, nach außen vorspringende Sicke (32') aufweist.

8. Wagenheber nach einem oder mehreren der Ansprüche 1 - 7, dadurch gekennzeichnet, daß der untere Rand der Standsäulenrückwand (14') zumindest im Bereich der Feder (30') eine nach außen weisende Ausrundung (14a') bildet.

## Claims

1. Screw jack comprising a column (10; 10') a threaded spindle (56) provided with a crank (70) being mounted at the top region of the column so as to be rotatable about its longitudinal axis as well as pivotable about a transverse axis (64) and a supporting arm (38) being mounted on the column between threaded spindle bearing (62) and lower column end so as to be pivotable about an axis (44) parallel to the said transverse axis (64), as well as comprising a load carrier (50) adapted to be placed against a vehicle body, said load carrier being attached to the supporting arm (38) in the region of its free end so as to be rotatable about an axis (52) parallel to the transverse axis (64) and its rotation relative to the supporting arm (38) is controlled by an adjusting element (56) such that the load carrier (50) always takes up approximately the same position relative to the vehicle body when the supporting arm (38) is pivoted, and comprising a base (18; 18') arranged at the lower end of the column,
characterized in that the base (18; 18') is designed as a base plate (18; 18') provided with an essentially plane lower supporting surface (20), said base plate being articulated to the column (10; 10') so as to be freely pivotable about a tilt axis (24) parallel to the transverse axis (64), that - when seen in the direction of the tilt axis (24) - a greater portion of the base plate (18; 18') is located on the side of the tilt axis (24) remote from the vehicle body during use, and that a spring (30; 30') is provided for urging the base plate (18; 18') into an attachment position against a stop formed by the column (10; 10').

2. Jack as defined in claim 1, characterized in that the base plate (18; 18') is connected with the column (10; 10') at two bearings (22) spaced from one another along the tilt axis (24) and that the two bearings (22) are displaceable relative to one another approximately in the longitudinal direction of the column due to elastic deformation of the column (10; 10') or due to the fact that the bearings are held so as to be limitedly displaceable in the column.

3. Jack as defined in claim 1 or 2, the load carrier (50) of which has a groove-like recess (72) for receiving a web-like region (74) of the vehicle body, characterized in that the recess (72) has a cross section widening in the direction towards the base of the groove.

4. Jack as defined in one or more of the preceding claims, the column (10; 10') of which has two side walls (12) spaced from one another in the direction of the tilt axis (24), characterized in that the side walls (12) have inclined edges at the bottom, the base plate (18; 18') resting against these edges in an attachment position of the jack.

5. Jack as defined in claim 1, characterized in that the spring (30') is designed as a spiral tension spring and when the base plate (18') is in attachment position extends parallel to the rear wall (14') of the column (10') having a U-shaped profile open towards the supporting arm (38) and is arranged in the interior of the column.

6. Jack as defined in claim 5, characterized in that the spring (30') abuts on the rear wall (14') of the column when the base plate (18') is in attachment position.

7. Jack as defined in claim 5, characterized in that the rear wall (14') of the column has for partially receiving the spring (30') an outwardly protruding bead (32') extending in the longitudinal direction of the column.

8. Jack as defined in one or more of claims 1 - 7, characterized in that the lower edge of the rear wall (14') of the column forms an outwardly directed curvature (14a') at least in the region of the spring (30').

## Revendications

1. Cric à vis comprenant une colonne (10 ; 10') sur la zone supérieure de laquelle une broche filetée (56) pourvue d'une manivelle (70) est supportée de manière à pouvoir tourner autour de son axe longitudinal ainsi que de manière à pouvoir pivoter autour d'un axe transversal (64) et sur laquelle, entre le palier (62) de la broche filetée et l'extrémité inférieure de la colonne, un bras de support (38) est supporté de manière à pouvoir pivoter autour d'un axe (44) parallèle à l'axe transversal précité (64), ainsi qu'un support de charge (50) qui peut être appliqué sur une carrosserie de véhicule, est agencé sur le bras de support (38) dans la zone de son extrémité libre, de manière à pouvoir pivoter autour d'un axe (52) parallèle à l'axe transversal (64) et peut être entraîné en rotation par rapport au bras de support (38) de manière commandée par un organe de réglage (56) de telle façon que le support de charge (50) occupe, lors du pivotement du bras de support (38), toujours approximativement la même position par rapport à la carrosserie du véhicule, et un pied (18 ; 18') qui est agencé sur l'extrémité inférieure de la colonne, caractérisé en ce que le pied (18 ; 18') est réalisé sous la forme d'une plaque de base (18 ; 18'), qui est pourvue d'une surface d'appui (20) inférieure sensiblement plane et qui est articulée sur la colonne (10 ; 10') de manière à pouvoir pivoter librement autour d'un axe de basculement (24) parallèle à l'axe transversal (64), en ce que, considérée suivant la direction de l'axe de basculement (24), une plus grande partie de la plaque de base (18 ; 18') se trouve du côté de l'axe de basculement (24) qui, en usage, est situé à l'opposé de la carrosserie du véhicule et en ce qu'un ressort (30 ; 30') qui comprime la plaque de base (18 ; 18') dans une position d'application contre une butée formée par la colonne (10 ; 10'), est prévu.

2. Cric suivant la revendication 1, caractérisé en ce que la plaque de base (18 ; 18') est reliée à la colonne (10 ; 10') sur deux paliers (22) disposés à distance l'un de l'autre le long de l'axe de basculement (24) et en ce que les deux paliers (22) peuvent être déplacés l'un par rapport à l'autre approximativement dans la direction longitudinale de la colonne par une déformation élastique de la colonne (10 ; 10') ou par le fait que les paliers sont maintenus de façon à pouvoir coulisser de manière limitée dans la colonne.

3. Cric suivant l'une des revendications 1 et 2, dont le support de charge (50) présente un évidement en forme de rainure (72) pour recevoir une zone de carrosserie (74) en forme de nervure, caractérisé en ce que l'évidement (72) présente une section transversale qui s'élargit en direction du fond de la rainure.

4. Cric suivant une ou plusieurs des revendications précédentes, dont la colonne (10 ; 10') présente deux parois latérales (12) agencées à distance l'une de l'autre suivant la direction de l'axe de basculement (24), caractérisé en ce que les parois latérales (12) présentent vers le bas des bords inclinés contre lesquels la plaque de base (18 ; 18') est en appui dans une position d'application du cric.

5. Cric suivant la revendication 1, caractérisé en ce que le ressort (30') est réalisé sous la forme d'un ressort de traction hélicoïdal et en ce que, lorsque la plaque de base (18') se trouve en position d'application, il s'étend parallèlement à la paroi arrière (14') de la colonne (10') présentant un profil en U ouvert vers le bras de support (38) et est agencé à l'intérieur de cette dernière.

6. Cric suivant la revendication 5, caractérisé en ce que le ressort (30') est en appui sur la paroi arrière (14') de la colonne lorsque la plaque de base (18') se trouve en position d'application.

7. Cric suivant la revendication 5, caractérisé en ce que la paroi arrière (14') de la colonne présente, pour recevoir partiellement le ressort (30'), une moulure (32') qui s'étend suivant la direction longitudinale de la colonne et qui fait saillie vers l'extérieur.

8. Cric suivant une ou plusieurs des revendications 1 à 7, caractérisé en ce que le bord inférieur de la paroi arrière (14') de la colonne forme, au moins dans la zone du ressort (30'), un arrondi (14a') vers l'extérieur.

# Fig.1

# Fig.2

Fig.3

Fig.4